# EUROPEAN PATENT APPLICATION

(11) **EP 1 954 043 A1**
(43) Date of publication of application: **06.08.2008**
(21) Application number: 06804966.7
(22) Date of filing: 18.10.2006
(51) Int. Cl.: H04N 7/14

(54) **A METHOD FOR INTERFACE ADAPTING IPTV WITH STREAM MEDIA DEVICE**

(30) Priority: 16.11.2005 CN 200510095450
(71) Applicant: ZTE Corporation, Shenzhen, Guangdong 518057 (CN)
(72) Inventor: LIU, Yan, Guangdong 518057 (CN); WANG, Yinlong, Guangdong 518057 (CN); HAN, Wei, Guangdong 518057 (CN); HU, Jie, Guangdong 518057 (CN)
(74) Representative: Vossius & Partner
(86) International application number: PCT/CN2006/002747
(87) International publication number: WO 2007/056924

(57) **Abstract**

A method and apparatus for interface adapting IPTV with a stream media device, including: an adaptation layer receives the batch commands from the service layer and judges the type of the batch commands; the adaptation layer judges the type of the batch commands, and analyzes or generates the batch commands into the atom commands respectively; the adaptation layer stores the analyzed or generated atom commands in the queue according to the constraint condition of the atom commands in the stream media device; the adaptation layer obtains the atom commands from the queue and transmits the request to the stream media device when the constraint condition is satisfied; the adaptation layer judges the performing result, if successful, ends process; otherwise, the adaptation layer selects the corresponding transmission mode according to the predefined policy. Using the invention, supplier can use a variety of stream media devices expediently and provides services for stream media consumers more conveniently and effectively.

## Description

### Technical Field

The present invention relates to the IPTV (Internet Protocol Television) field of the telecommunication industry, and especially, relates to an interface adapting technology of the IPTV.

### Background Art

An IPTV (Internet Protocol Television) service refers to a PC (personal computer) or a TV which is a display terminal is connected to a broadband network via a set-top box, thereby providing users with an interactive TV experience and a multimedia service of a broadband value-added service. In such a manner, the applicable range of the IPTV service is rendered rather broad.

The IPTV makes full use of the advantages and features of the telecommunication, the TV and the internet respectively, and achieves a substantive interact between a media provider and a media consumer effectively, therefore, it will be the next promising value-added service and has a great market potential.

A stream media device plays an important role in the IPTV service, and has the function of providing services directly to terminal users. The stream media device employs a stream transmission technology, and transmit the multimedia data through the network in real time. The method of real-time data transmission divides data into groups in a proper size by means of streaming, and then transmits the data groups between a server and a client.

There are many kinds of products that manufactured by stream media device manufacturers, and the manufactured stream media devices differ in thousands ways, thus rendering a great difficulty in managing an upper-layer service and controlling the stream media device.

In addition, in the IPTV service, the upper-layer service targets at customers of enterprise level, such as telecommunication network operators or virtual service operators, therefore, it needs to make sure that both the real-time or non-real-time functions of the service layer could be achieved and presented to customers in an expected time so as to satisfy the demands of customers of the telecommunication level or the enterprise level. Therefore, most of the batch commands or the atom commands, of which the batch commands in most cases, of the service layer has to obtain the performing result of the stream media device layer in a lower layer, and when failure result is obtained, the portion of commands which are failed can be re-transmitted. Hence, most of the interfaces for the service layer are asynchronous.

As for the stream media device layer, requirement can be met as long as it could recognize the atom commands in the basic stream media technology layer. In addition, the stream media device layer faces to many terminal users directly and provides services for the terminal users directly, so the stream media device layer not only has to take great network load, but also has to make sure that the response time to the terminal users should not exceed a certain threshold value, and in this case, the stream media devices of most stream media device manufacturers do not have a database, so the stream media device seldom caches the commands of the upper layer. Therefore, the interfaces between the stream media device and the stream media device layer are generally synchronous.

Hence, in the IPTV service, the challenge that an adaptation layer faces mainly lies in the conversion between the batch commands and the atom commands, and the coordination between a synchronous message transfer mode and an asynchronous message transfer mode.

Therefore, in order to modularize and unify a service management layer in the upper layer, the interface adaptation between the IPTV and the stream media device is necessary, and in the case of that the control and management module of the upper layer is no need to be changed, different stream media devices could communicate with the service management layer through the interface adaptation layer.

### Summary of the Invention

The object of the present invention lies in providing a method for interface adapting the IPTV and the stream media device, thus rendering the IPTV able to communicate with many kinds of stream media device, so as to solve the problem of diversity of the existing stream media devices, achieve the unification of the upper layer control module of the stream media device in the existing IPTV system, and improve the properties of an IPTV service.

The present invention employs the following technical solutions: an method for interface adapting the IPTV with the stream media device, including the following steps:
step 1: an adaptation layer receives batch commands from a service layer;
step 2: the adaptation layer judges the type of the batch commands, and analyzes or generates the batch commands into atom commands respectively;
step 3: the adaptation layer stores the analyzed or generated atom commands in a queue according to the constraint condition of the atom commands in the stream media device;
step 4: the adaptation layer obtains the atom commands from the queue and transmits a request to the stream media device when the constraint condition is satisfied; and
step 5: the adaptation layer judges the performing result in the step 4, if successful, ends the process; otherwise, the adaptation layer can select a corresponding transmission mode according to a predefined policy.

Furthermore, in step 2, as for different types of the batch commands, they are processed respectively as follows: analyzing the number of the commands in the batch commands and the length of each command of the batch commands, and then analyzing the batch commands into atom commands that accord with a transmission format according to the two parameters; or, analyzing a specific field in the batch commands according to the message structure of the batch commands, and then generating atom commands that accord with the transmission format according to a predefined format.

Furthermore, the constraint condition in step 3 at least comprises the time and a priority.

Furthermore, there are at least two processing manners for the constraint for time: if the commands need to be transmitted immediately in view of time, then the commands can be transmitted to the stream media device directly without being stored in the queue; if the commands need to be transmitted at a certain time point, then the commands are firstly stored in the queue, and then the commands will be taken out from the queue and transmitted when the time point is due.

Furthermore, in step 5, the corresponding relationship between the predefined policy that has been employed and the transmission mode at least comprises: discarding the commands immediately if they need not to be re-transmitted; storing the commands in the queue if they need to be re-transmitted.

Furthermore, the command stored in the queue can be transmitted in at least two transmission modes: if the re-transmitting has a constraint condition, then the commands are taken out from the queue and transmitted to the stream media device when the constraint condition is satisfied; if the re-transmitting does not have a constraint condition, the commands are taken out from the queue and transmitted to the stream media device when the adaptation layer is idle.

Furthermore, the queue can employ a table, and can also employ a realization method of a hash unit.

The present invention further provides an apparatus for interface adapting the IPTV and the stream media device, including:
a receiving unit, located in an adaptation layer, for receiving batch commands in a service layer;
an analyzing and generating unit, located in the adaptation layer, for judging the type of the batch commands, and analyzing or generating the batch commands into atom commands respectively;
a storage unit, located in the adaptation layer, for obtaining the atom commands from a queue and transmitting a request to the stream media device in the case of a constraint condition is satisfied; and
a judging and selecting unit, located in the adaptation layer, for ending the process when the storage unit succeeds in transmitting; while the storage unit fails in the transmitting, selecting a corresponding transmission mode according to a predefined policy.

Furthermore, as for different types of the batch commands, they are processed in the analyzing and generating unit respectively as follows: analyzing the number of the batch commands and the length of each command in the batch commands, and then analyzing the batch commands into atom commands that accord with a transmission format according to the two parameters; or, analyzing a specific field in the batch commands according to the message structure of the batch commands, and then generating atom commands that accord with the transmission format according to a predetermined format.

Furthermore, the constraint condition at least comprises the time and a priority.

Furthermore, there are at least two processing manners for the constraint for time: if the commands need to be transmitted immediately in view of time, then the commands can be transmitted to the stream media device directly without being stored in the queue; if the commands need to be transmitted at a certain time point, then the commands are firstly stored in the queue, and then the commands will be taken out from the queue and transmitted when the time point is due.

Furthermore, in the judging and selecting unit, the corresponding relationship between the employed predefined policy and the transmission mode at least comprises: discarding the commands immediately if they need not to be re-transmitted; storing the commands in the queue if they need to be re-transmitted.

Furthermore, the command stored in the queue can be transmitted in at least two transmission modes: if the re-transmitting has a constraint condition, then the commands are taken out from the queue and transmitted to the stream media device when the constraint condition is satisfied; if the re-transmitting does not have a constraint condition, the commands are taken out from the queue and transmitted to the stream media device when the adaptation layer is idle.

Furthermore, the queue can employ a table, and can also employ a realization method of a hash unit.

Compared with the prior art, the present invention, under the condition of combining the stream media technology, can not only implement the basic service required by the telecommunication level and meet the basic requirement, but also allow telecommunication level users to select certain types of interface adaptive module according to their service demands dynamically, so as to satisfy certain desired specific requirements, thus improving the flexibility of the IPTV service, avoiding loading some unnecessary modules, and satisfying the self-determination of the users. Under the condition of adding new services, new functions can be added in the modules on the basis that the original modules are not modified by using the present invention, thus greatly improving the scalability of the modules, avoiding the operating cost caused by new development, improving the stability of the system and maintenance quality on later stages, and reducing the maintenance cost.

### Description of the Accompanying Drawings

Figure 1 is a frame structure chart of the system applied in the present invention;
figure 2 is a flow chart of the method for interface adapting according to the present invention;
figure 3 is a flow chart of the channel establishment during the channel management according to the embodiment of the present invention; and
figure 4 is a schematic view of the apparatus for interface adapting according to the present invention.

### Embodiments for Carrying Out the Present Invention

The embodiments of the present invention will be described below with reference to the accompanying drawings thereof.

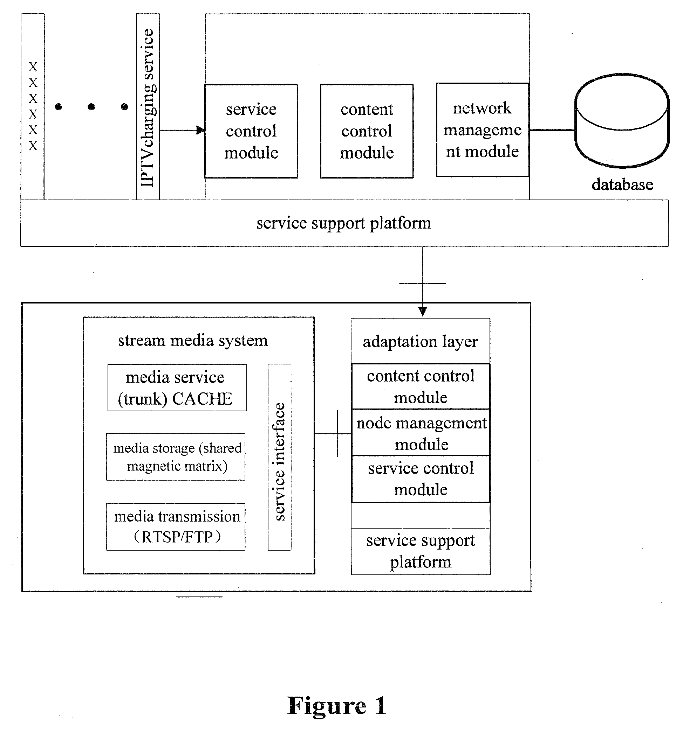

Figure 1 is a frame structure chart of the IPTV system applied in the present invention, and the system comprises a service support platform, an adaptation layer and a stream media system. The service support platform (service layer) comprises a service control module, a content control module and a network management module, and further comprises a database and various kinds of IPTV services. The stream media system (stream media device layer) comprises a media service cache, a media storage apparatus, a media transmission unit and a service interface. The adaptation layer analyzes the batch commands of the service layer and transforms them into basic atom commands that can be recognized by the stream media device, and coordinates the synchronous and asynchronous transmission modes between the service layer and the stream media device layer.

In order to ensure total throughput of the service and stable service quality, many stream media devices can be concentrated to be a cluster, and this cluster of stream media devices is referred to be an edge node. All the stream media devices within an edge node uniformly serve the terminal users within a certain area, and in this case, the data flow within the whole network can be controlled effectively. In the service layer, only the overall performance and the service throughput of each edge node are concerned, while the performance parameters of the various stream media devices within the edge node are not concerned and it is not concerned that function flowing to a in service layer an upper , either, and also, if each stream media device of the edge node is managed by the service layer, a bottle-neck about the service will thus be formed and great burden of the network is also formed. In order to relieve the management burden of the service layer, it is employed that respective adaptation layers at each edge node manage the stream media devices in a distributed way, and the management data of the present edge node is analyzed and collected, and then reported to a service layer in an upper in a centralized way.

The interface between an IPTV service management layer and the stream media device can be classified, and the types mainly include content management, channel management, charging, resource reporting, and etc. Different types of interfaces have different distinctive features, and according to the features, not only the types of the interfaces can be recognized, but also specific operations can be packaged at different message structures according to the specific functional features of different interfaces, so that the demand of communication with different stream media devices can be met and the control flow can be simplified significantly, too. For example, the channel number in the channel management, and the content number in the content management can be conveniently used for recognizing and determining which type of the message structure is to be used or had been used.

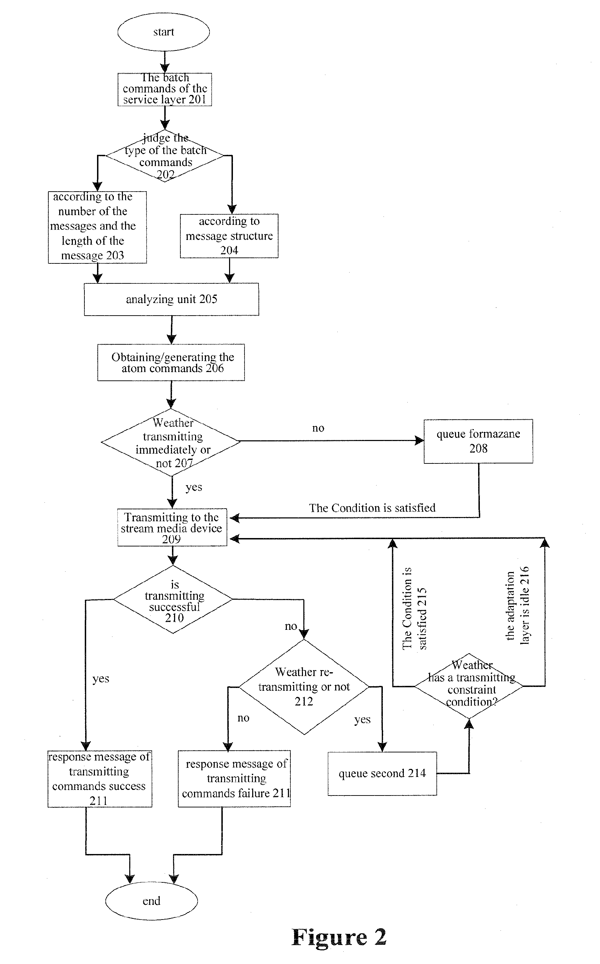

Figure 2 is a flow chart of the method for interface adapting according to the present invention, including the following steps:
Step 1, the adaptation layer receives batch commands from the service layer (201);
Step 2, the adaptation layer judges the type of the commands in step 1 (202) and processes the commands respectively;
   for the type A (203), firstly, analyze the number of the commands in the batch commands and the length of each command of the batch commands, and then analyze the batch commands into atom commands that accord with a transmission format according to the two parameters (206) via the analyzing unit (205);
   for the type B (204), firstly, analyze a specific field in the batch commands via the analyzing unit (205) according to the message structure thereof, and then generating atom commands that accord with the transmission format according to a predefined format (206);
Step 3, the adaptation layer stores the analyzed or generated atom commands in step 2 in the queue (208) according to the constraint condition (207) of the atom commands in the stream media device;

Wherein, the constraint condition at least comprises the time and a priority; herein, there are at least two processing manners for the constraint for time:
if the commands need to be transmitted immediately in view of time, then the commands can be transmitted to the stream media device directly without being stored in the queue 208;
if the commands need to be transmitted at a certain time point, then the commands are firstly stored in the queue (208), and then the commands will be taken out from the queue (208) and transmitted when the time point is due;
Step 4, the adaptation layer obtains the atom commands from the queue (208) and transmits the request (209) to the stream media device when the constraint condition is satisfied.
Step 5, judge the performing result of the commands in step 4 (210), if successful (211), ends the process; otherwise, a corresponding transmission mode is selected according to the predefined policy (212).

Wherein, the queues in steps 3 and 5 can employ a table and can also employ a realization method of a hash unit.

Wherein in step 5, the corresponding relationship between the predefined policy that has been employed and the transmission mode at least comprises:
discarding the commands immediately if they need not to be re-transmitted (213);
storing the commands in the queue (214) if they need to be re-transmitted; and the command stored in the queue can be transmitted in at least two transmission modes:
if the re-transmitting has a constraint condition (215), then the commands are taken out from the queue and transmitted to the stream media device when the constraint condition is satisfied;
if the re-transmitting does not have a constraint condition (216), the commands are taken out from the queue and transmitted to the stream media device when the adaptation layer is idle.

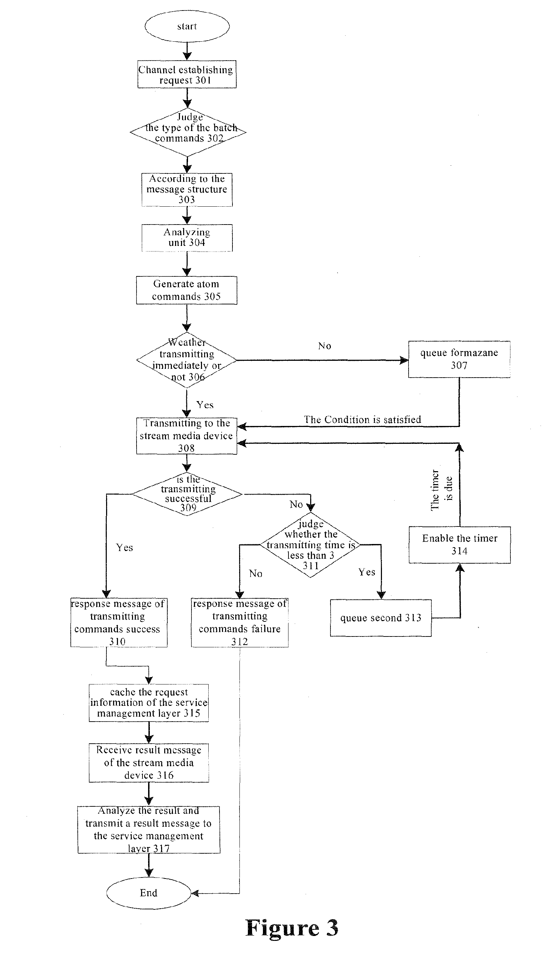

Figure 3 is an embodiment of the present invention, and the application of the present application is described hereinafter in conjunction with figure 3 by taking the flow of establishing a channel in the channel management as an example. In this embodiment, the message transmission mode of the service management module of the upper layer is asynchronous, while in the stream media device, the message transmission mode is synchronous. The flow according to the present embodiment includes the following steps:
Step A, the adaptation layer receives the channel establishment request message of a service management layer in the upper layer (i.e., the service layer) (301);
Step B, firstly, the adaptation layer judges the type of the commands (302), then analyzes the message of the service management layer (304) according to structure of the request message required by the stream media device (303), for example, the channel number is analyzed to ChannelCode that can be recognized by the steam media device, then the fields in the message are analyzed and then the request message to be transmitted to the stream media device is assembled (305);
Step C, if the command needs to be transmitted immediately (306), then a request message is transmitted to the stream media device (308) immediately, otherwise the atom commands in the step B are stored in the queue formazane (307);
Step D, in the case of that an indicated condition is satisfied, the commands are obtained from the queue formazane (307) and a request message is transmitted to the stream media device (308);
Step E, judge the performing result of the commands in step D (309), if the transmitting succeeds, step F is executed; otherwise the commands are stored in the queue second, and if the commands need to be re-transmitted, judge whether the re-transmitting has constraint condition (311); the constraint condition according to the present embodiment refers to whether the transmission time is less than 3, and if yes, the commands are taken out from the queue second (313) and transmitted to the stream media device, otherwise step F is executed; furthermore, another constraint condition timer (314) is set in this step, and commands are taken out from the queue second and transmitted to the stream media device when the timer is due;
Step F, if transmitting the commands to the stream media device succeeds, a receipt succeeding ACK response message is returned to the upper layer service management layer (310), otherwise a receipt failing message is returned to the upper layer service management layer (312), and ends the present session;
Step G, after transmitting the request to the stream media device succeeds, the request message of the upper layer service management layer is cached in a corresponding message queue (315);
Step H, a synchronous result message returned by the steam media device is received (316), and the result message is analyzed firstly, and then assembled to a message structure that can be recognized by the upper layer service management layer, for example, if a sequence number of the request transmitted by the service management layer is obtained from the cached request message, then the result message is transmitted to the service management module of the upper layer (317), so that the service management module can recognize which is corresponding to the result message, and then the transmission of this asynchronous message is completed; and ends the process.

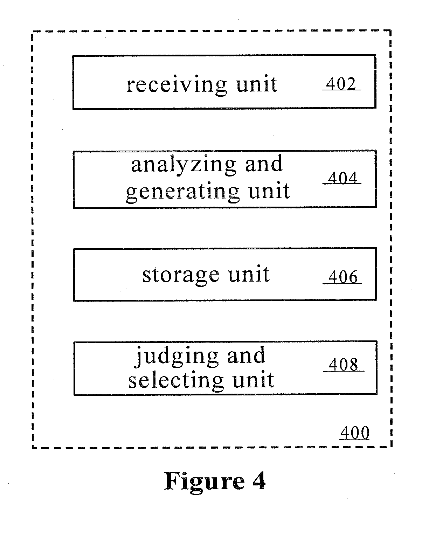

Figure 4 is a schematic view of the apparatus for interface adapting according to the present invention. As shown in figure 4, the apparatus for interface adapting 400 comprises: a receiving unit 402, located in the adaptation layer, for receiving batch commands in the service layer; an analyzing and generating unit 404, located in the adaptation layer, for judging the type of the batch commands, and analyzing or generating the batch commands into atom commands respectively; a storage unit 406, located in the adaptation layer, for obtaining the atom commands from a queue and transmitting a request to the stream media device in the case of a constraint condition is satisfied; and a judging and selecting unit 408, located in the adaptation layer, for ending the process when the storage unit succeeds in transmitting, while the storage unit fails in the transmitting, selecting a corresponding transmission mode according to a predefined policy.

Wherein, as for different types of the batch commands, they are processed in the analyzing and generating unit 404 respectively as follows: analyzing the number of the batch commands and the length of each command in the batch commands, and then analyzing the batch commands into atom commands that accord with a transmission format according to the two parameters; or, analyzing a specific field in the batch commands according to the message structure of the batch commands, and then generating atom commands that accord with the transmission format according to a predetermined format. Herein, the constraint condition can be the time, a priority, and etc.

There are at least two processing manners for the constraint for time: if the commands need to be transmitted immediately in view of time, then the commands can be transmitted to the stream media device directly without being stored in the queue; if the commands need to be transmitted at a certain time point, then the commands are firstly stored in the queue, and then the commands will be taken out from the queue and transmitted when the time point is due.

In the judging and selecting unit 408, the corresponding relationship between the employed predefined policy and the transmission mode at least comprises: discarding the commands immediately if they need not to be re-transmitted; and storing the commands in the queue if they need to be re-transmitted.

The command stored in the queue can be transmitted in at least two transmission modes: if the re-transmitting has a constraint condition, then the commands are taken out from the queue and transmitted to the stream media device when the constraint condition is satisfied; if the re-transmitting does not have a constraint condition, the commands are taken out from the queue and transmitted to the stream media device when the adaptation layer is idle. Herein, the queue can employ a table, and can also employ a realization method of a hash unit.

Using the invention, supplier can use a variety of stream media devices expediently and provides services for stream media consumers more conveniently and effectively.

Of course, the present invention also has various embodiments, according to the present invention, those skilled in the art can make various modifications and alterations without departing from the spirit and the essential of the present invention, and the corresponding modifications and alterations are within the scope of the appended claims.

## Claims

1. A method for interface adapting IPTV with a stream media device, including the following steps:
step 1: an adaptation layer receives batch commands from a service layer;
step 2: the adaptation layer judges the type of the batch commands, and analyzes or generates the batch commands into atom commands respectively;
step 3: the adaptation layer stores the analyzed or generated atom commands in a queue according to the constraint condition of the atom commands in the stream media device;
step 4: the adaptation layer obtains the atom commands from the queue and transmits a request to the stream media device when the constraint condition is satisfied; and
step 5: the adaptation layer judges the performing result step 4, if successful, ends the process; otherwise, a corresponding transmission mode is selected according to a predefined policy.

2. The method according to claim 1, **characterized in that** in step 2, as for the different types of the batch commands, they are processed respectively as follows: analyzing the number of the commands in the batch commands and the length of each command of the batch commands, and then analyzing the batch commands into atom commands that accord with a transmission format according to the two parameters; or, analyzing a specific field in the batch commands according to the message structure of the batch commands, and then generating atom commands that accord with the transmission format according to a predefined format.

3. The method according to claim 1 or 2, **characterized in that** the constraint condition for the time in step 3 at least comprise: the time, a priority.

4. The method according to claim 3, **characterized in that** there are at least two processing manners for the constraint for time: if the commands need to be transmitted immediately in view of time, then the commands can be transmitted to the stream media device directly without being stored in the queue; if the commands need to be transmitted at a certain time point, then the commands are firstly stored in the queue, and then the commands will be taken out from the queue and transmitted when the time point is due.

5. The method according to claim 1 or 2, **characterized in that** in step 5, the corresponding relationship between the predefined policy that has been employed and the transmission mode at least comprises: discarding the commands immediately if they need not to be re-transmitted; storing the commands in the queue if they need to be re-transmitted.

6. The method according to claim 5, **characterized in that** the command stored in the queue can be transmitted in at least two transmission modes: if the re-transmitting has a constraint condition, then the commands are taken out from the queue and transmitted to the stream media device when the constraint condition is satisfied; if the re-transmitting does not have a constraint condition, the commands are taken out from the queue and transmitted to the stream media device when the adaptation layer is idle.

7. The method according to any of claims 1, 2, 4 and 6, **characterized in that** the queue can employ a table, and can also employ a realization method of a hash unit.

8. An apparatus for interface adapting IPTV with a stream media device, **characterized in** including:
a receiving unit, located in an adaptation layer, for receiving batch commands in a service layer;
an analyzing and generating unit, located in the adaptation layer, for judging the type of the batch commands, and analyzing or generating the batch commands into atom commands respectively;
a storage unit, located in the adaptation layer, for obtaining the atom commands from a queue and transmitting a request to the stream media device in the case of a constraint condition is satisfied; and
a judging and selecting unit, located in the adaptation layer, for ending the process when the storage unit succeeds in transmitting; while the storage unit fails in the transmitting, selecting a corresponding transmission mode according to a predefined policy.

9. The apparatus according to claim 8, **characterized in that** as for different types of batch commands, they are processed in the analyzing and generating unit respectively as follows: analyzing the number of the batch commands and the length of each command in the batch commands, and then analyzing the batch commands into atom commands that accord with a transmission format according to the two parameters; or, analyzing a specific field in the batch commands according to the message structure of the batch commands, and then generating atom commands that accord with the transmission format according to a predefined format.

10. The apparatus according to claim 1 or 2, **characterized in that** the constraint condition at least comprises: the time, a priority.

11. The apparatus according to claim 10, **characterized in that** there are at least two processing manners for the constraint condition for time: if the commands need to be transmitted immediately in view of time, then the commands can be transmitted to the stream media device directly without being stored in the queue; if the commands need to be transmitted at a certain time point, then the commands are firstly stored in the queue, and then the commands will be taken out from the queue and transmitted when the time point is due.

12. The apparatus according to claim 8 or 9, **characterized in that** in the judging and selecting unit, the corresponding relationship between the employed predefined policy and the transmission mode at least comprises: discarding the commands immediately if they need not to be re-transmitted; storing the commands in the queue if they need to be re-transmitted.

13. The apparatus according to claim 12, **characterized in that** the command stored in the queue at least can be transmitted in two transmission modes: if the re-transmitting has a constraint condition, then the commands are taken out from the queue and transmitted to the stream media device when the constraint condition is satisfied; if the re-transmitting does not have a constraint condition, the commands are taken out from the queue and transmitted to the stream media device when the adaptation layer is idle.

14. The apparatus according to any of claims 8, 9, 11 and 13, **characterized in that** the queue can employ a table, and can also employ a realization method of a hash unit.
